Europäisches Patentamt

European Patent Office

Office européen des brevets

(11) Numéro de publication: **0 219 365**
**A1**

## (12) DEMANDE DE BREVET EUROPEEN

(21) Numéro de dépôt: 86401852.8

(22) Date de dépôt: 21.08.86

(51) Int. Cl.⁴: **B 65 G 65/06**

(30) Priorité: **06.09.85 FR 8513260**

(43) Date de publication de la demande:
**22.04.87 Bulletin 87/17**

(84) Etats contractants désignés:
**BE CH DE GB IT LI LU NL**

(71) Demandeur: **FIVES-CAIL BABCOCK, Société anonyme**
**7 rue Montalivet**
**F-75383 Paris Cedex 08 (FR)**

(72) Inventeur: **Chever, René**
**13, rue de Chantereine**
**F-77177 Brou sur Chantereine (FR)**

(74) Mandataire: **Fontanié, Etienne**
**FIVES-CAIL BABCOCK 7, rue Montalivet**
**F-75383 Paris Cedex 08 (FR)**

(54) **Gratteur de reprise pour aire de stockage circulaire.**

(57) La présente invention a pour objet un gratteur de reprise pour une aire circulaire de stockage de produits en vrac comportant un chassis (34-36) auquel est suspendue une chaîne racleuse (24) et qui repose sur un support (28) déplaçable sur un chemin circulaire concentrique à l'aire de stockage et sur un support rotatif (30) aménagé dans l'axe de l'aire de stockage.

Pour permettre une reprise complète des matières stockées le long des murs radiaux (16), une articulation à axe vertical (38) est prévue entre une extrémité du chassis et le support (28) sur lequel elle repose. et l'autre extrémité du chassis est déplaçable sur un port rotatif (30) et dont le centre est situé sur l'axe de ladite articulation.

Fig 1

EP 0 219 365 A1

## Description

Gratteur de reprise pour aire de stockage circulaire.

La présente invention a pour objet un gratteur de reprise pour une aire circulaire de stockage de produits en vrac comportant un chassis auquel est suspendue une chaîne racleuse et qui respose, d'une part, sur un support, tel qu'un chariot, déplaçable sur un chemin circulaire concentrique à l'aire de stockage et, d'autre part, sur un support rotatif aménagé dans l'axe de l'aire de stockage.

Le gratteur, qui est généralement disposé radialement, sert à amener les matières stockées en tas vers une trémie centrale d'où elles sont évacuées par un transporteur en sous-sol.

Lorsque l'aire de stockage est divisée en plusieurs secteurs par des murs radiaux, le gratteur ne peut pas, compte tenu de son encombrement, être amené le long des murs, parallèlement à ceux-ci, et il laisse en place, le long de ces murs, des quantités importantes de matières qui risquent de s'ébouler.

La présente invention apporte une solution à ce problème et propose un gratteur qui est conçu pour pouvoir être placé parallèlement aux murs de séparation, le long de ceux-ci, et permet donc une reprise complète des matières stockées.

Le gratteur objet de la présente invention est caractérisé en ce que son chassis est lié à l'un de ses supports par une articulation à axe vertical et repose sur son autre support par des moyens autorisant la rotation dudit chassis autour de l'axe de ladite articulation.

Selon un mode de réalisation particulier de l'invention, ladite articulation est prévue entre une extrémité du chassis et le support déplaçable sur le chemin concentrique à l'aire de stockage, et l'autre extrémité est déplaçable sur un chemin en arc de cercle qui est aménagé sur le support rotatif et dont le centre est situé sur l'axe de ladite articulation. Le support déplaçable sur le chemin concentrique à l'aire de stockage est constitué par un chariot muni de galets, dont certains au moins sont moteurs, et portant un pivot vertical sur lequel est monté le chassis du gratteur. Le support rotatif est constitué par une couronne centrée sur l'axe de l'aire de stockage et montée rotative sur un chemin circulaire surélevé porté par une colonne centrale. Cette couronne est munie de deux bras horizontaux, disposés de part et d'autre de son axe et portant le chemin en arc de cercle. L'extrémité du chassis du gratteur proche de l'axe de l'aire de stockage a la forme d'une fourche dont les deux branches reposent sur lesdits bras par l'intermédiaire de galets roulant sur ledit chemin. De préférence, le rayon du chemin en arc de cercle sur lequel se déplace l'extrémité du chassis proche de l'axe de l'aire de stockage sera approximativement égal à la distance séparant cet axe de l'axe de l'articulation liant l'autre extrémité du chassis à son support pour obtenir une bonne répartition des charges sur la couronne pour toute position du gratteur.

La description qui suit se réfère aux dessins l'accompagnant qui montrent, à titre d'exemple non limitatif, un mode de réalisation de l'invention et sur lesquels :

La figure 1 est une vue en plan d'un gratteur réalisé conformément à l'invention ;

La figure 2 est une vue en élévation du gratteur; et

Les figures 3 à 5 sont des représentations schématiques du bâtiment de stockage et du gratteur montrant ce dernier dans différentes positions.

Le gratteur représenté sur les dessins équipe un bâtiment de stockage constitué par un muret circulaire, une colonne centrale et un toit conique supporté par le muret et la colonne.

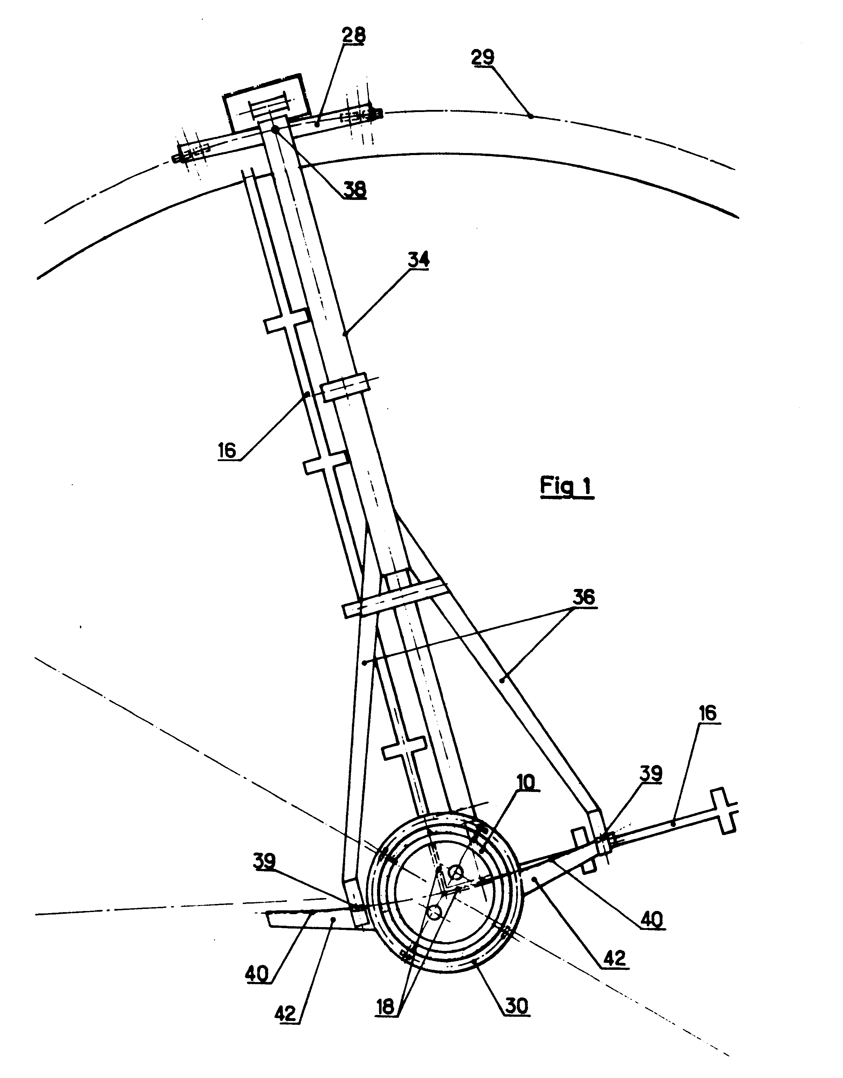

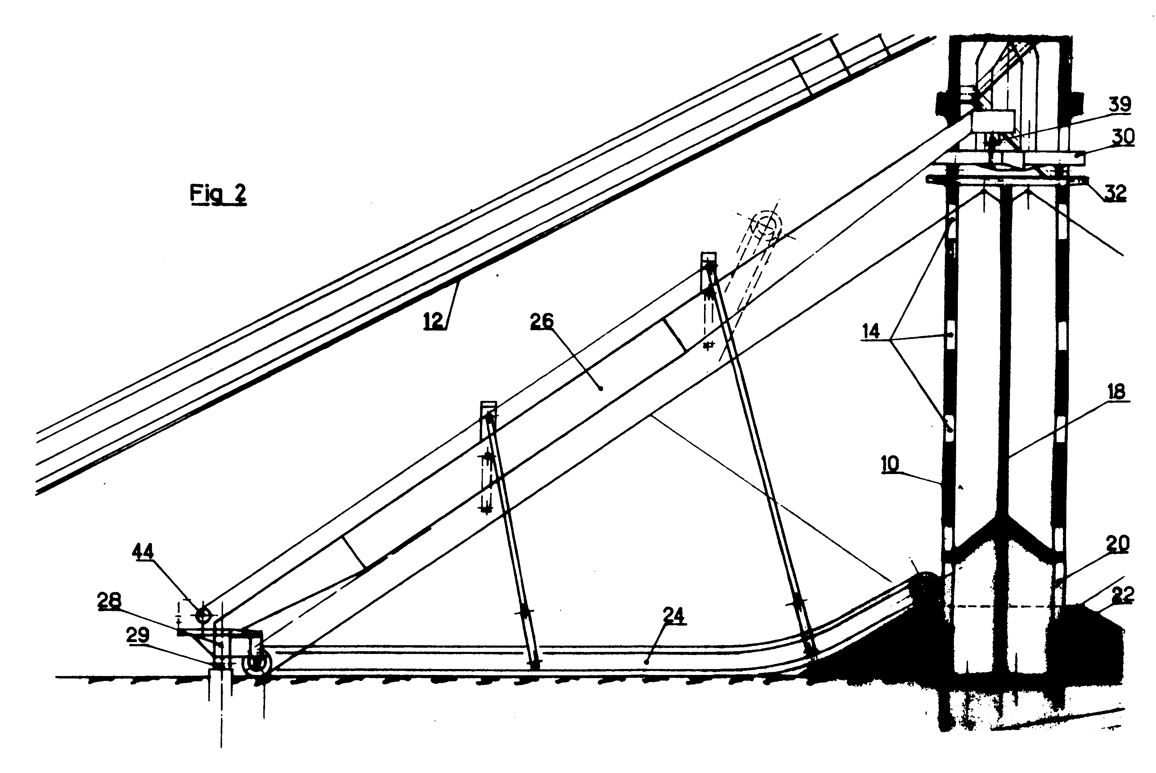

Seule la colonne 10 a été représentée sur les figures 1 et 2. Celle-ci est creuse et est utilisée pour la mise en tas et la reprise des produits stockés. Pour la mis en tas, les produits sont amenés au sommet de la colonne par un transporteur à bande 12 et déversés à l'intérieur de celle-ci d'où ils s'écoulent sur l'aire de stockage, à travers des ouvertures 14 ménagées à différents niveaux dans la colonne, pour former un tas conique.

Dans l'exemple représenté, l'aire de stockage est divisé en deux sections par deux murs 16 disposés suivant des rayons pour permettre le stockage de deux produits de qualité différentes. L'intérieur de la colonne 10 est divisé de la même façon par des cloisons 18 et deux goulottes permettent de déverser les produits amenés par le transporteur 12 dans l'un ou l'autre des secteurs de la colonne.

Pour la reprise, les produits sont amenés à s'écouler, soit par gravité, soit au moyen du gratteur, dans la partie inférieure de la colonne 10, à travers des ouvertures 20, la partie inférieure de la colonne étant séparée de la partie supérieure par un toit. Les produits sont évacués au bas de la colonne par des extracteurs, un pour chaque qualité de produit, alimentant un transporteur placé en sous-sol.

Le bas de la colonne 10 est entouré par un massif en béton 22 qui évite la formation d'un tas mort et dont la partie supérieure forme entonnoir facilitant l'écoulement des produits par les ouvertures 20.

Les produits constituant la partie supérieure du tas s'écoulent par gravité à travers les ouvertures 20. Par contre, il est nécessaire d'utiliser un gratteur pour amener les produits constituant la base du tas à s'écouler par ces ouvertures.

Le gratteur est constitué par une chaîne racleuse 24 de construction classique suspendue à un chassis 26 supporté à son extrémité extérieure par un chariot 28 roulant sur un rail circulaire 29 entourant l'aire de stockage et à son autre extrémité par une couronne 30 entourant la colonne 10 et munie de galets roulant sur un chemin circulaire 32 solidaire de la colonne. Le chassis 26 a la forme d'une fourche et est constitué par une poutre principale 34 et deux branches 36. La poutre 34 repose sur le chariot 28 par l'intermédiaire d'un pivot vertical 38.

Les extrémités des branches 36 sont munies de galets 39 roulant sur deux bouts de rail 40 portés par deux bras horizontaux 42 solidaires de la couronne 30 est disposés de part de d'autre de son axe. Les deux bouts de rail 40 ont la forme d'arcs de cercle centrés sur l'axe du pivot 38 et de rayon égal à la distance séparant cet axe de l'axe de l'aire de stockage.

La chaîne racleuse 24 est liée au chassis 26 du gratteur, à son extrémité extérieure, par une articulation à axe horizontal et y est suspendue au moyen de câbles enroulés sur un treuil 44 permettant de modifier son inclinaison.

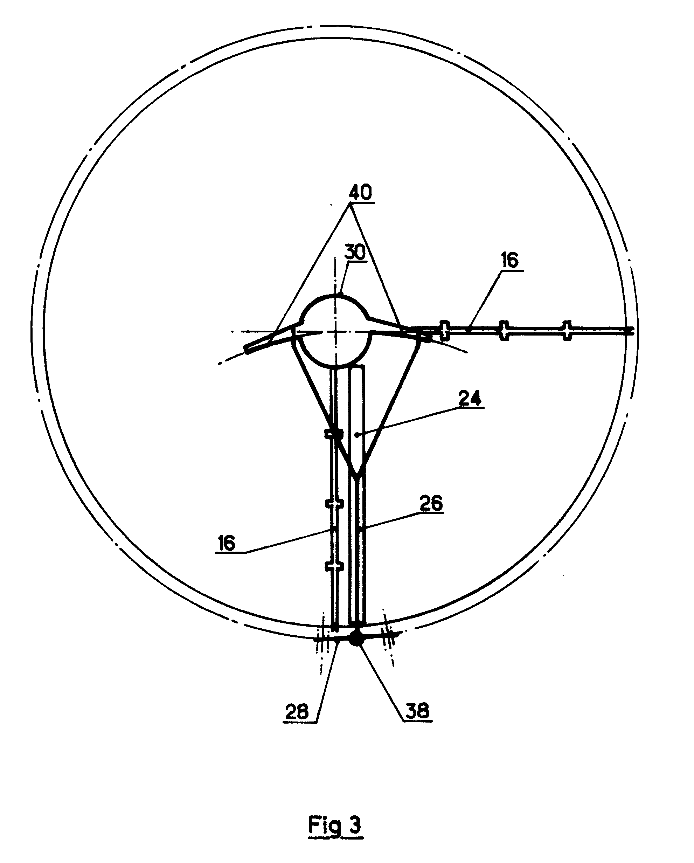

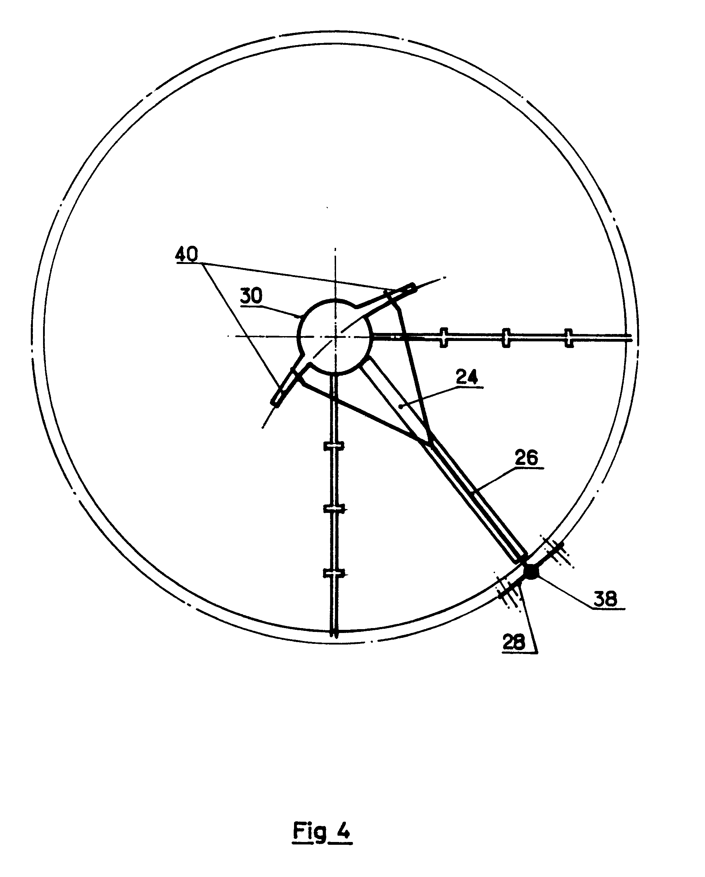

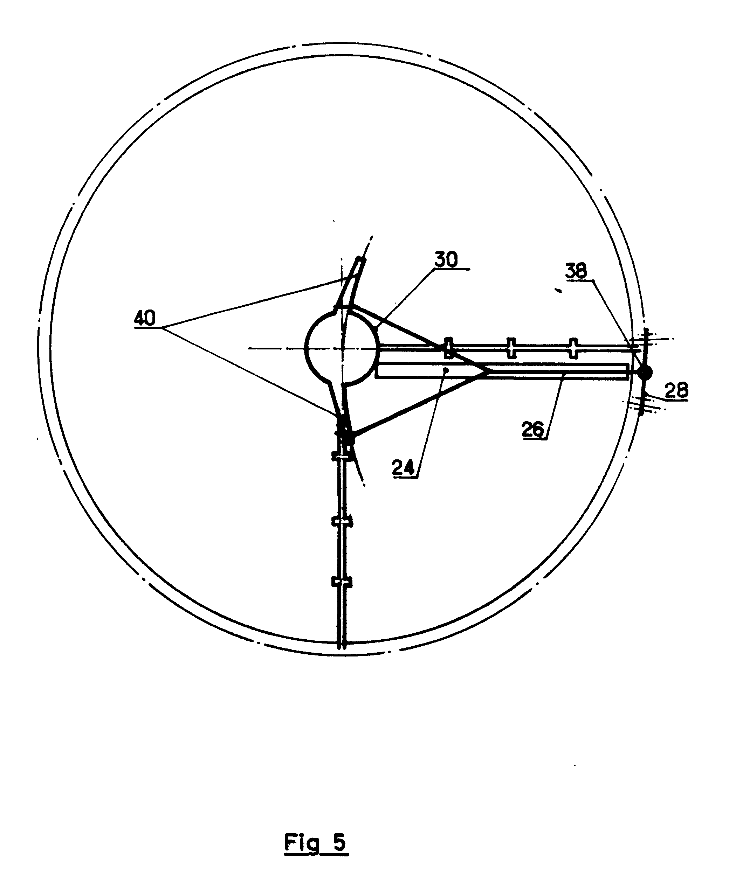

Pour la reprise des produits stockés sur l'une ou l'autre des sections de l'aire de stockage, la chaîne racleuse est mise en marche, au moyen de son moteur d'entraînement, dans le sens convenable pour amener les produits vers le centre de l'aire de stockage, et simultanément le gratteur est animé d'un mouvement de rotation alternatif entre les deux murs 16 délimitant cette section. La rotation du gratteur est commandée par un moteur entraînant un ou plusieurs galets du chariot 28. L'extrémité intérieure, proche de l'axe de l'aire de stockage, du gratteur peut aussi être déplacée au moyen de moteurs entraînant les galets 39 qui roulent sur les rails 40. Les deux mouvements simultanés permettent d'amener la chaîne racleuse dans des positions parallèles aux murs 16 lorsque le gratteur s'en approche, comme représenté sur les figures 3 et 5. La figure 4 montre le gratteur dans une position intermédiaire. Le déplacement de l'extrémité intérieure du gratteur, entre ces deux positions limites, est effectué à une vitesse relativement lente pendant la rotation du gratteur. Tous les mouvements du gratteur sont automatisés grâce à des capteurs de position placés sur le rails 29 du chariot 28 et sur les rails 40.

D'autres moyens autorisant les mouvements relatifs, nécessaires pour permettre d'amener la chaîne racleuse le long des murs radiaux, parallèlement à ceux-ci, du chassis du gratteur et de ses supports mobiles, - chariot 28 et couronne 30 - peuvent être utilisés à la place de ceux décrits. On pourrait, par exemple, articuler le chassis sur la couronne 30 et le faire reposer sur le chariot 28 par des moyens autorisant des mouvements relatifs de rotation autour d'un axe vertical et de translation en direction radiale ; dans cette variante, la rotation de la couronne serait commandée. Il est bien entendu que ces modifications et toutes celles qui peuvent être apportées à la réalisation décrite par l'emploi de moyens techniques équivalents entrent dans le cadre de l'invention.

**Revendications**

1. Gratteur de reprise pour aire de stockage circulaire comportant un chassis (26) auquel est suspendue une chaîne racleuse (24) et qui repose sur un support (28) déplaçable sur un chemin circulaire concentrique à l'aire de stockage et sur un support rotatif (30) aménagé dans l'axe de l'aire de stockage, caractérisé en ce que ledit chassis (26) est lié à l'un de ses supports (28) par une articulation à axe vertical (38) et repose sur son autre support (30) par des moyens (39, 40) autorisant la rotation dudit chassis autour de l'axe de ladite articulation.

2. Gratteur selon la revendication 1, caractérisé en ce que ladite articulation (38) est prévue entre une extrémité du chassis (26) et ledit support (28) déplaçable sur un chemin circulaire concentrique à l'aire de stockage et l'autre extrémité du chassis est déplaçable sur un chemin en arc de cercle (40) qui est aménagé sur ledit support rotatif (30) et dont le centre est situé sur l'axe de ladite articulation.

3. Gratteur selon la revendication 2, caractérisé en ce que ledit support déplaçable sur un chemin circulaire concentrique à l'aire de stockage est constitué par un chariot (28) muni de galets dont certains au moins sont entraînés par un moteur, et ledit chariot porte un pivot vertical (38) sur lequel est monté ledit chassis (26).

4. Gratteur selon la revendication 2 ou 3, caractérisé en ce que ledit support rotatif est constitué par une couronne (30) centrée sur l'axe de l'aire de stockage et montée rotative sur un chemin circulaire surélevé (32) porté par une colonne centrale (10), en ce que ledit chemin en arc de cercle (40) est aménagé sur deux bras horizontaux (42). solidaires de la couronne et disposés de part et d'autre de son axe, et en ce que l'extrémité dudit chassis (26) proche de l'axe de l'aire de stockage a la forme d'une fourche dont les deux branches (36) reposent sur lesdits bras par l'intermédiaire de galets (39) roulant sur ledit chemin en arc de cercle.

5. Gratteur selon la revendication 4, caractérisé en ce que le rayon dudit chemin en arc de cercle (40) est approximativement égal à la distance séparant l'axe de ladite articulation (38) de l'axe de l'aire de stockage.

0219365

Fig 1

0219365

Fig 2

Fig 3

0219365

Fig 4

0219365

Fig 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 570 818 (F. KERNER)<br>* Page 2, lignes 5-22; figures * | 1,4,5 | B 65 G  65/06 |
| | --- | | |
| A | DE-B-1 078 943 (F. SIEGLER)<br>* Colonne 1, ligne 29 - colonne 2, ligne 37; figure 3 * | 1,4 | |
| | --- | | |
| A | DE-A-2 231 268 (G. SCHADE) | | |
| | ----- | | |

**DOMAINES TECHNIQUES RECHERCHES (Int. Cl.4)**

B 65 G
B 28 C

Le présent rapport de recherche a été établi pour toutes les revendications

| Lieu de la recherche | Date d'achèvement de la recherche | Examinateur |
|---|---|---|
| LA HAYE | 26-11-1986 | VAN ROLLEGHEM F.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82